# EUROPEAN PATENT SPECIFICATION

(11) **EP 2 148 537 B1**
(45) Date of publication and mention of the grant of the patent: **04.05.2016**
(21) Application number: 08160915.8
(22) Date of filing: 22.07.2008
(51) Int. Cl.: H04W 36/08, H04W 16/16, H04W 76/04, H04W 92/20, H04W 92/04, H04W 88/08

(54) **Handovers in wireless communication systems**
Rufweitergaben in drahtlosen Kommunikationssystemen
Transferts d'appel dans des systèmes de communication sans fil

(43) Date of publication of application: 27.01.2010
(73) Proprietor: Fujitsu Limited, Kawasaki-shi, Kanagawa 211-8588 (JP)
(72) Inventor: Li, Zhaojun, Guildford, Surrey GU3 2DJ (GB)
(74) Representative: Stebbing, Timothy Charles

(56) References cited:
- WO-A-2008/023927
- SAMSUNG: "Requirement discussion for Home ENB" 3GPP DRAFT; R3-070977 HOME ENB REQUIREMENTS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. tsg_ran\WG3_Iu\TSGR3_56\docs, no. Kobe, Japan; 20070507, 2 May 2007 (2007-05-02), XP050161859
- ORANGE ET AL: "RP-070209 Requirements for LTE Home eNodeBs" INTERNET CITATION, 9 March 2007 (2007-03-09), XP002493618 [retrieved on 2007-03-08]
- PANASONIC: "S1 connectivity for HeNB" 3GPP DRAFT; R3-081182, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. tsg_ran\WG3_Iu\TSGR3_60\docs, no. Kansas City, USA; 20080505, 29 April 2008 (2008-04-29), XP050164370
- SAMSUNG: "X2 interface for HNB" 3GPP DRAFT; R3-080268, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. tsg_ran\WG3_Iu\TSGR3_59\docs, no. Sorrento, Italy; 20080211, 4 February 2008 (2008-02-04), XP050163481

## Description

The present invention relates to wireless communication systems, more particularly but not exclusively to wireless communication systems adopting the use of a so-called Home eNodeB (HeNB) as part of the long-term evolution (LTE) of UMTS (also called 3G) cellular technology.

UMTS or 3G wireless communication systems are being deployed worldwide. Future development of UMTS systems is centred on the so-called evolved UMTS terrestrial radio access network (evolved UTRAN or eUTRAN), more commonly referred to by the project name LTE.

In LTE, the architecture of the wireless communication system evolves from one supporting both circuit-switched and packet-switched communications, to an all-IP, packet-switched system. The overall architecture of the eUTRAN and its core network becomes simplified, and they combine to form the so-called Evolved Packet System (EPS), also called System Architecture Evolution (SAE).

As in current UMTS systems, the basic architecture proposed for LTE consists of a radio access network (the eUTRAN) connecting users (or more precisely, user equipments, UEs) to access nodes acting as base stations, these access nodes in turn being linked to a core network. In eUTRAN terminology the access node is called an eNode B or eNB and is the sole type of node in the eUTRAN as such, thus simplifying the architecture and reducing the number of hops in comparison with earlier wireless communication systems. A separate radio network controller (RNC) as used in previously-proposed systems is no longer required, its functions being incorporated into the eNodeB. The eNBs connect to the core network which, in LTE, is referred to as the evolved packet core (EPC).

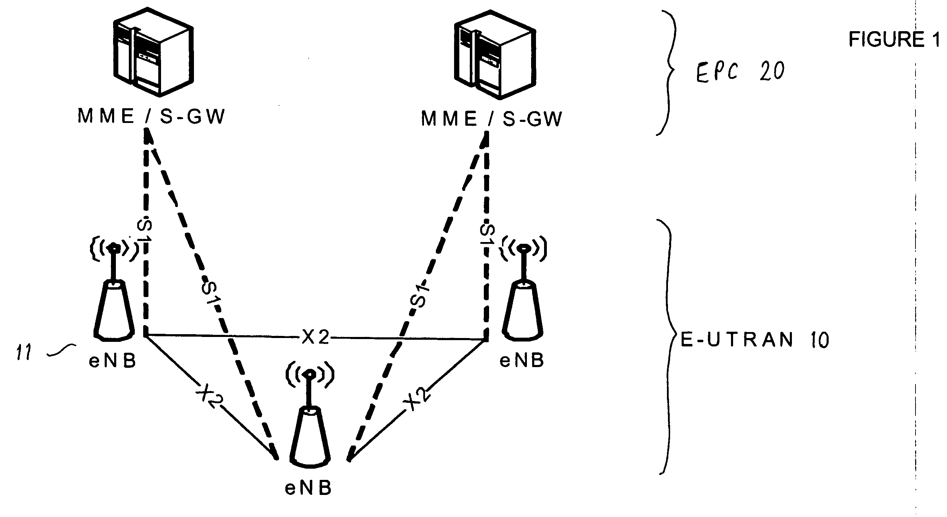

Figure 1 shows a simplified view of this architecture. Each eNB 11 is in communication with one or more UEs (not shown); such UEs are said to be "attached" to the eNB. The eNBs are linked to each other by means of the X2 interface. This may involve a wireless link, a wired link or some sort of virtual link. This allows the eNBs to coordinate their actions without involving the core network. The eNBs are also connected to entities of the core network (EPC 20) via another interface called S1. Such entities include a mobility management entity (MME) and a serving Gateway (S-GW, sometimes also called A-GW), which in Fig. 1 are indicated both together, though in practice they are at least logically distinct as explained below. The S1 interface supports a many-to-many relationship between the MMEs or S-GWs, and the eNBs. As indicated in Fig. 1, the E-UTRAN 10 comprises the eNBs 11 providing the E-UTRA user plane and control plane terminations towards the UEs; meanwhile, the higher level functions of MME and S-GW form part of the EPC 20.

To reduce implementation costs and avoid wasteful duplication of hardware, it is possible for service providers to each deploy their own EPC 20 whilst sharing the E-UTRAN 10 (i.e. the eNBs 11). In this scenario, each eNB 11 would connect a UE to the appropriate EPC based on some identifier of the service provider contained in a request from the UE.

Any wireless communication system involves both communications links for user data and communications links for signalling or control data. In LTE, these aspects of the system are strictly separate. In other words the "user plane" and "control plane" (formed of layers PDCP/RLC/MAC/PHY for user data and RRC for signalling, respectively: see below) are split and handled by distinct entities in the system, allowing one plane to be reconfigured or upgraded without affecting the other. The user plane is also sometimes called the bearer plane, and the control plane may also be referred to as the signalling plane.

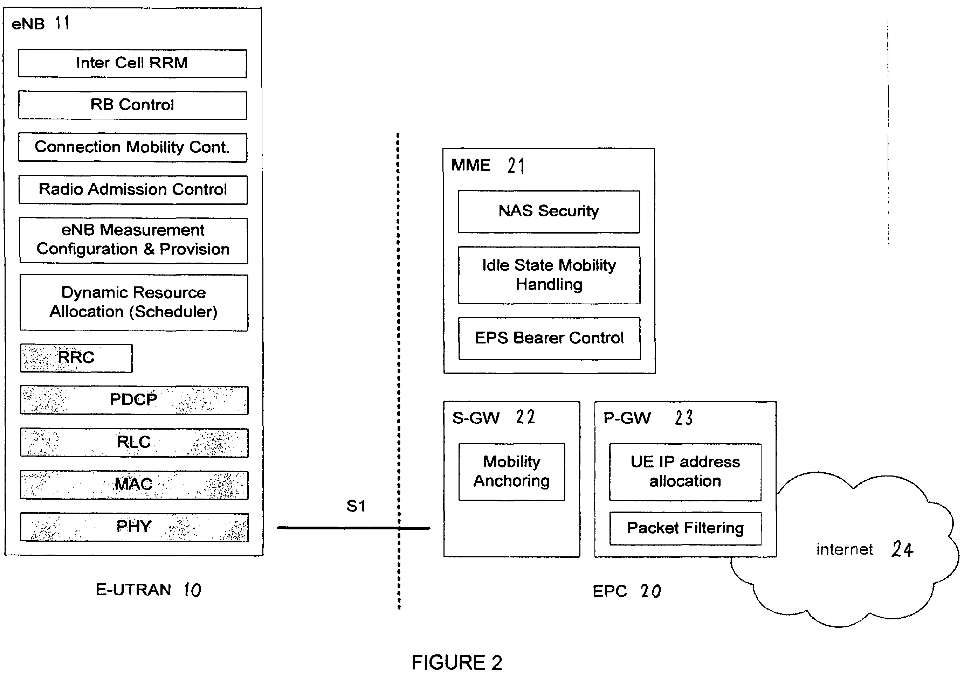

In the E-UTRAN, the user plane comprises a packet data convergence protocol (PDCP), radio link control (RLC), medium access control (MAC) and the physical layer (PHY), whilst the control plane performs radio resource control (RRC). The above division of functions is depicted in Figure 2, showing the major division of functions between an eNB 11, MME 21 and S-GW 22 in an LTE system.

RRC, which is handled by the eNB 11, involves paging UEs, broadcasting system information, managing UE measurement reporting, and making handover decisions based on the measurement reports. In general, "handover" refers to any change in a UE's serving cell, whether or not involving a change in eNB (it is possible for one eNB to provide multiple cells depending on the antenna configuration). In this specification, however, "handover" usually refers to the process of a UE ceasing to be attached to a first, "source" eNB and instead becoming attached to a second "target" eNB, thus transferring responsibility for the UE from the source to the target eNB (usually as a result of the UE having moved closer to the target eNB). The main function of the MME, as its name suggests, is to manage mobility of UEs. It is a signalling-only entity; in other words, user data packets do not pass through the MME. The MME 21 is also responsible for controlling security (including authenticating users), and for EPS bearer control (see below).

Meanwhile, the S-GW 22 is employed in the user plane and is responsible for packet forwarding of user data on the downlink to the UE and on the uplink. The S-GW 22 provides a "mobility anchor" for the user plane during handovers of a UE from one eNB 11 to another. It also manages and stores UE "contexts" which are the details of active connections with UEs including so-called bearers (see below).

Several of each type of entity may be deployed in a practical system. Whilst the MME 21 and S-GW 22 have distinct functions as already mentioned, they also communicate with each other via a further newly-defined interface, S11. The separation of MME and S-GW allows the former to be optimised for signalling whilst the latter can be optimised for high-bandwidth packet processing. It also allows the MMEs 21 to be scaled based on the number of sessions (active users) with the S-GWs 22 independently scaled to the volume of traffic.

In addition, other entities will normally be provided in the EPC 20, notably a PDN Gateway or P-GW 23 as shown in Figure 2. This interfaces the core network 20 to external packet data networks such as the Internet 24, or an IMS (IP Multimedia Services) network, and communicates with the S-GW 22 to receive packets on the uplink from the UEs. Each UE may be simultaneously connected to multiple P-GWs 23 for accessing multiple PDNs. Whilst the P-GW is a separate logical gateway from the S-GW, it is possible for a single hardware unit to provide both functions.

Figure 2 shows a single S1 interface between the eNB 11 and the core network. In fact, however, there are two distinct interfaces: S1-C (also called S1-MME) for the control plane, and S1-U for the user plane. Likewise, communications over the X2 interface include both X2-C for signalling and X2-U for user data.

The concept of "bearers" is important for achieving quality-of-service (QoS) in a packet-based network such as LTE. In general, a "bearer" can be thought of as an information transmission path of defined capacity, delay and bit error rate, etc. so as to enable a -given service to be provided. Various types or levels of bearer can be established; for example a radio bearer (in LTE) is a service provided by layer 2 for transfer of user data between the UE and eUTRAN.

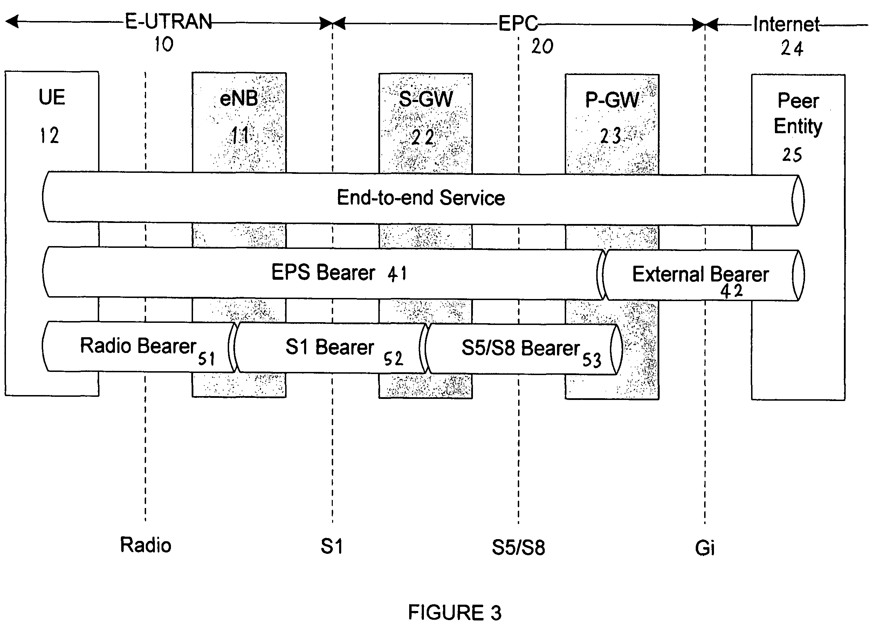

Figure 3 shows an EPS Bearer Service Architecture proposed for LTE In Fig. 3, the vertical bars represent the main entities in the user plane, from the UE 12 to eNB 11 through to S-GW 22 and P-GW 23, terminating in a peer entity (such as an Internet web server 25) connected to the P-GW 23. To provide an end-to-end service between the UE 12 and Peer Entity 25 (as indicated by the upper horizontal band in the figure), the system sets up "bearers" as shown. An EPS Bearer 41 represents the entire connection within the LTE system; it constitutes a QoS flow for a particular service. The connection continues outside the LTE system via an External Bearer 42.

The EPS Bearer 41 is made up, in turn, of a radio bearer 51 between the UE 12 and eNB 11, and an S1 Bearer 52 between the eNB 11 and S-GW 22. A further Bearer (S5/S8 Bearer 53) is set up between the S-GW 22 and P-GW 23. Each Bearer can be regarded as a "tunnel" in a given protocol layer for transport of packets, connecting the end points for the duration of a particular service or "session", e.g. voice call or download. Thus, the radio bearer 51 transports the packets of the higher-layer EPS Bearer 41 between the UE 12 and eNB 11, and the S1 Bearer 52 transports the packets of the EPS Bearer 41 between the eNB 11 and S-GW 22. Bearer control, mentioned previously, includes the setting up of bearers for a particular session so as to ensure sufficient QoS, taking into account the resource situation in the E-UTRAN 10 and existing sessions already in progress. It also involves the modification and release of bearers.

Bearers are also defined in the signaling plane. As currently proposed, LTE employs the known SCTP protocol for transmitting signalling messages between an eNB and MME, or between two eNBs. To be precise, SCTP is used as the transport layer of an S1 or X2 signalling bearer as the case may be. This requires a so-called SCTP association setup to be performed between the eNB and MME, or between the two eNBs.

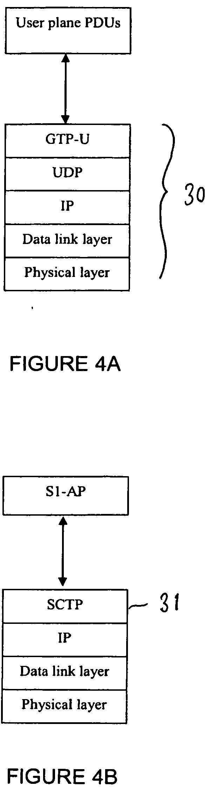

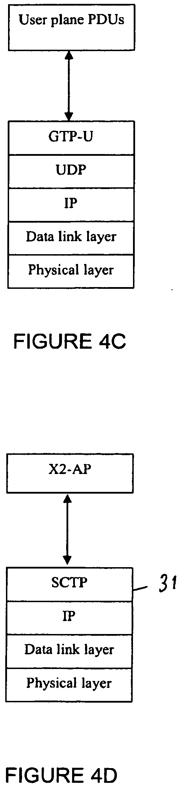

Here, "transport layer" refers to a layer in a protocol stack. Figures 4A to 4D show the protocol stack defined for each of the S1-U, S1-C, X2-U and X2-C interfaces. The S1-U protocol stack is denoted 30 in Figure 4A and as shown in Fig.s 4B and 4D, both control plane interfaces involve the use of SCTP 31 in the transport layer for reliable transmission of signalling packets. The S1-C and X2-C interfaces are of particular relevance to the invention to be described.

The above discussion has so far mentioned only the eNB 11, the equivalent of the base station in earlier wireless communication systems, and which can serve many UEs in a relatively wide-area cell ("macro cell"). However, part of the LTE project is focussed on the possibility of deploying base station nodes on a much smaller geographical scale for homes or small businesses, each serving only a few UEs. This is the Home eNode B or HeNB, which corresponds to the so-called "femtocell" of some other proposals. The basic idea of a HeNB or femtocell is to enable so-called "fixed-mobile convergence": a single handset (UE) would be capable of communicating with an eNB covering a macro cell whilst the user is out and about, and of switching to a HeNB once the user is within range of a home or office cell, without needing to duplicate hardware resources needed for systems of different types. Generally, the HeNB would define a small cell within a larger, overlaid macro cell, necessitating handover between a HeNB and the macro cell eNB as required to ensure a stronger signal to/from the UE, or merely to switch to a cheaper tariff. For example, use of the HeNB might be preferred when the user is within range of it, in order to reduce connection charges. In addition, the HeNB might be used to ensure that UEs can be reached in specific areas, such as underground or within the confines of a large building. Thus, although the HeNB cell would still be overlaid by the macro cell it could provide coverage for a "hole" in the macro cell. However, alongside the potential for HeNBs to improve coverage and capacity of an LTE network, there is also the possibility of mutual interference between a HeNB and a macro cell eNB.

Whilst the functionality of the HeNB has yet to be decided, it is expected that it will retain most or all of the capabilities of the eNB but on a smaller scale. It is expected that the S1 connections (both user plane and control plane) to each HeNB would be made via fixed broadband (e.g. cable or DSL), since this is usually already available in most homes, offices and shops. HeNBs might be unused for much of the time (unlike a macro cell eNB, which would be expected to remain active indefinitely) allowing them to be placed in an inactive or sleep mode.

By contrast with eNBs which would be the property of, and managed by, the LTE network operator, it is expected that users would buy their own HeNBs much like a Wi-Fi router today. This may significantly reduce the cost of implementing the LTE network. A large-scale LTE network could encompass thousands of macro eNBs collectively covering a wide geographical area. However, if the concept of the HeNB proves successful, there might be millions of them deployed within the same LTE network, though not all would be active simultaneously. This raises issues of, for example, how the MMEs are to manage such a large number of S1 connections with the HeNBs without multiplying the number of MMEs and/or their individual processing power. In addition, each eNB (henceforth called macro eNB, to distinguish it from the HeNB) may have to maintain a large number of X2 connections with HeNBs deployed within the macro cell it serves. Dynamic connectivity (switching connections off and on as and when appropriate) is one approach to limit the total number of connections to be managed at any one time. Even where a HeNB is in use by a UE, once a session is in progress without any change, the S1-C connection (connection to MME on the control plane) might be dropped after a certain time to reduce the overall number of active connections, whilst maintaining the S1-U connection to the S-GW. It may also help to reduce the risk of interference between HeNBs and an eNB of an overlaying macro cell.

In particular, there is the issue of handover from one HeNB to a macro-cell eNB, or from one HeNB to another. A problem here is that if the HeNB which is the "source" for the handover has not performed any signalling recently, such that its S1 or X2 connections have been released, or have become broken for any reason, additional time is required to re-establish the S1 or X2 connections prior to any handover taking place. The longer the total time that is required to complete the handover, the less satisfactory is the experience for the user. A similar problem arises in the situation of a handover from a macro eNB, if the "target" Home eNodeB has likewise lost its connections.

Samsung: "Requirement discussion for Home eNB", 3GPP Draft; R3-070977, 2 May 2007, XP050161859 discloses a cellular wireless communication system according to the preamble of claim 1. This document discloses as one requirement that S1 network connectivity shall be established only when it is needed for signalling interaction or data transmission. The document discloses as another requirement that mobility between H-NB and macro-cell shall be supported without performance degradation compared to inter-ENB handover.

WO 2008/023927A discloses a handover procedure in a mobile communication system, for handing over a UE from a Source eNB to a Target eNB. A handover decision is taken by the Source eNB on the basis of a measurement result supplied to the Source eNB from the UE.

Samsung: "X2 Interface for HNB", 3GPP Draft; R3-080268, 4 February 2008, XP050163481, discusses a deployment case of HeNB and macro eNB in which a macro eNB can have many HeNBs in its coverage area, the HeNBs powering on/off frequently causing a need for the macro eNB to manage many STCP connections and setup/release frequently.

According to a first aspect of the present invention, there is provided a cellular wireless communication system in which a user equipment UE is capable of wireless communication for exchanging data and/or signalling information with either of first and second nodes of a radio access network, the first and second nodes being connectable wirelessly or by wired means for exchanging signalling information with each other and with a control entity, and arranged to perform a handover of the UE from one of the nodes to the other, the first node having: connection managing means arranged to manage a connection dynamically with the second node and/or with the control entity such that the connection is made or broken in accordance with the presence or absence of signalling information; and characterised by: monitoring means arranged to monitor one or more parameters relating to communication with the UE when the first node is in wireless communication with the UE; and handover preparation means arranged to pre-emptively re-establish said connection with the second node and/or with the control entity in the event that at least one parameter monitored by the monitoring means indicates the possibility of a handover of the UE from the first node to the second node.

According to a second aspect of the invention, there is provided a cellular wireless communication method in which a user equipment UE exchanges data and/or signalling information by wirelessly communicating with either of first and second nodes of a radio access network, the first and second nodes exchanging signalling information with each other and with a control entity, and arranged to perform a handover of the UE from one of the nodes to the other, the method comprising: the first node managing a connection dynamically with the second node and/or with the control entity such as to make or break said connection in accordance with the presence or absence of signalling information; characterised by: the first node monitoring one or more parameters relating to communication with the UE when the first node is in wireless communication with the UE; and the first node pre-emptively re-establishing said connection with the second node and/or with the control entity in the event that at least one parameter monitored by the monitoring means indicates the possibility of a handover of the UE from the first node to the second node.

According to a third aspect of the present invention, there is provided a wireless communications device for use as an access node of an wireless communication system and having:
connection managing means arranged to manage dynamically a connection with any other access node of the system and/or with a control entity thereof; characterised by
monitoring means arranged to monitor a parameter relating to communication with user equipment when the device is in wireless communication with the user equipment; and
handover preparation means arranged, pre-emptively and prior to actual handover of the user equipment, to instruct the connection managing means to re-establish said connection in the event that at least one parameter monitored by the monitoring means indicates the possibility of a handover of the user equipment.

Thus, in an LTE network having Home eNodeBs, there is a issue of potential delay in handover of a UE (in either direction) between a Home eNodeB and another eNodeB owing to the need to set up again a dropped (released or broken) X2 or S1 connection. Such set up can take considerable time since the Home eNodeB relies on fixed broadband to connect with the core network. In embodiments of the present invention, to avoid this the source node for the handover, such as a Home eNodeB, watches for a potential handover situation and prepares for it by pre-emptively re-establishing the dropped connection to the target node, such as an eNodeB, or to the MME. Then, upon issuance of an actual handover request, the handover procedure can be completed without undue delay.

Reference is made, by way of example only, to the accompanying drawings in which:
Figure 1 shows the overall architecture proposed for LTE;
Figure 2 shows the division of functions among eNB, MME, S-GW and P-GW in an LTE wireless communication system;
Figure 3 illustrates the concept of bearers in an LTE wireless communication system;
Figures 4A to 4D illustrate protocol stacks for, respectively, an S1 user plane, S1 control plane, X2 user plane and X2 control plane;
Figure 5 shows the sequence of operations in a proposed S1 handover process;
Figure 6 shows the sequence of operations in a proposed X2 handover process;
Figure 7 illustrates an X2 connection setup procedure;
Figure 8 illustrates an S1 connection setup procedure;
Figure 9 illustrates a handover preparation procedure in a first embodiment of the present invention;
Figure 10 illustrates a handover preparation procedure in a second embodiment of the present invention; and
Figures 11 and 12 show the results of simulations to determine the effect of the first embodiment and the second embodiment respectively.

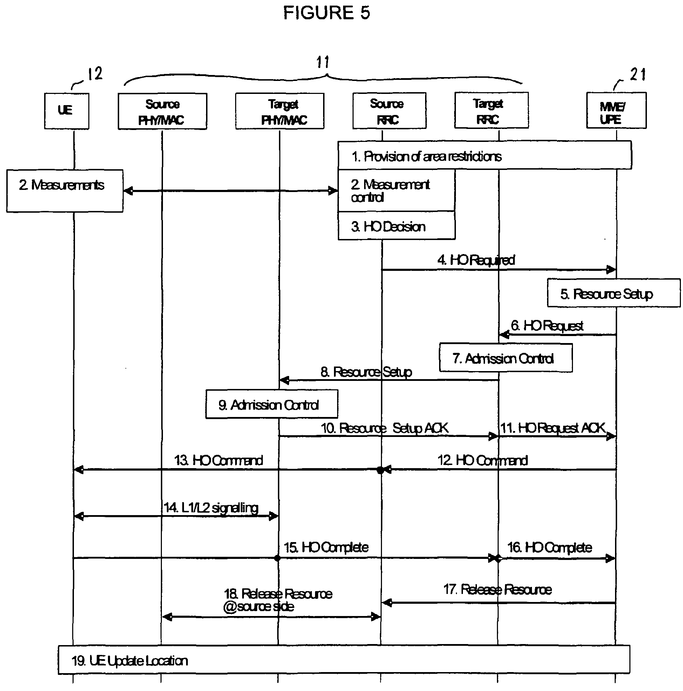

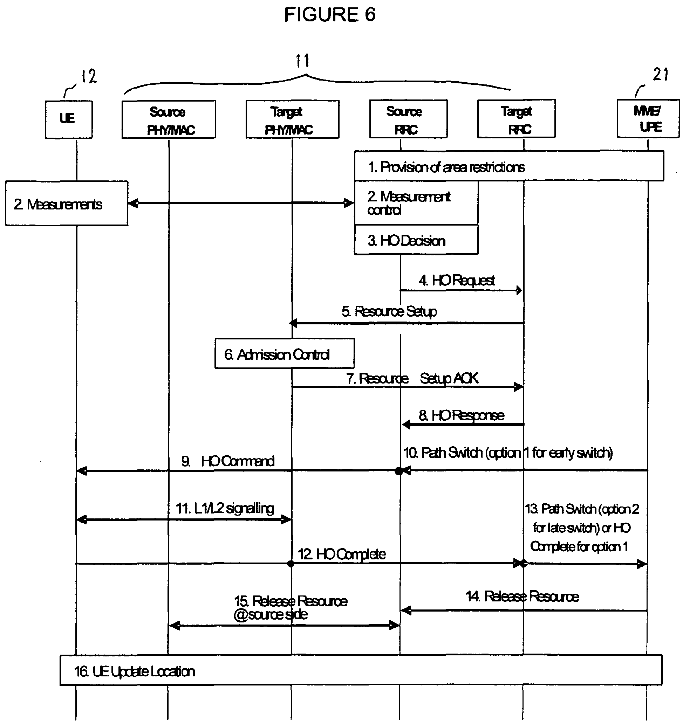

An embodiment of the present invention will now be described with reference to an LTE system by way of example. Figures 5 and 6 show handover procedures proposed for LTE in the case of S1 (that is, a handover which involves the MME) and X2 (handover not involving the MME), respectively. In Figures 5 and 6, "Source PHY/MAC", "Source RRC", "Target PHY/MAC" and "Target RRC" all refer to functions of an eNB 11 or HeNB (refer back to Figure 2). "Source" denotes the source eNB 11 for the handover (the node to which a UE is already attached) and "Target" the eNB 11 which is the target of the handover (to which the UE wishes to attach).

Taking Figure 5 as an example, the handover is prompted (step 2 as shown) by measurements conducted at the UE 12 (such as CINR of the signal from the Source eNB, leading to a Handover Decision (step 3). This prompts an HO Required signal to be issued by the Source eNB to, in this case, the MME 21 (here labelled MME/UPE where UPE denotes Universal Processing Equipment), following which the MME 21 performs Resource Control (step 5) and issues a Handover Request (step 6) to the target eNB, or more precisely to the RRC layer (function) of the target eNB. As can be seen from Figure 5, several further steps 7 to 19 (not relevant here) are needed before completion of the handover process.

The X2 handover procedure according to Figure 6 is very similar, except that in this case it proceeds without the specific involvement of the MME 21. Thus, the "Handover Required" signal over the S1 interface to the MME 21 is replaced by an "HO Request" directly to the target RRC (eNB) over the X2 interface.

As mentioned, dynamic connections of HeNBs may result in an increased delay during handovers between macro and home cells because of the need for re-establishment of the S1 or X2 connections including the SCTP association setup. This may affect the handover performance significantly, especially for the critical scenario of handing over from an HeNB to an overlapping Macro eNB. This scenario will now be discussed further by way of example; however, the present invention is not limited to this scenario.

In the scenario already mentioned, in which a UE has already established a session via a HeNB for conducting a voice call or the like, the UE may have to perform a handover towards an overlay macro eNB as the user moves out of the HeNB's coverage. In this situation, although the S1-U interface between the HeNB and the Serving Gateway is available for the ongoing service, the S1-C interface between the HeNB and the MME may have been released (for example, as part of a dynamic connection management procedure), or may have become broken (for example, owing to an unintentional loss of signal). At the same time, the X2 interface towards the macro eNB may not be available either. In this case, either the re-establishment of the S1-C connection is needed for S1 Handover, or the re-establishment of X2 connection is required to perform X2 Handover.

In the reverse situation of handover from a macro eNodeB to a HeNB, the former is assumed to be always active and thus to maintain its connections with the MME and other active nodes. On the other hand, the target HeNB may not be active, and thus may not have S1 or X2 connections available (for example as a result of a dynamic connection management algorithm). Thus, the present invention can also be applied in the scenario of eNB handover to a HeNB. Likewise, the present invention may also be applied in the situation of a handover from one HeNB to another.

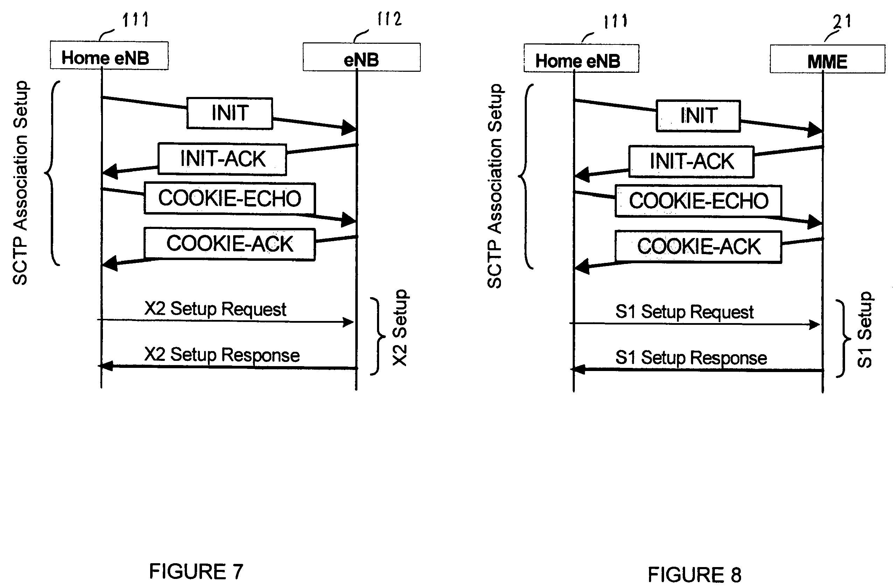

Figures 7 and 8 illustrate the procedures to establish an X2 connection and an S1 connection respectively. In Figure 7, a HeNB 111 first sends an INIT signal to the target eNB (macro or Home) 112; the latter responds with an INIT-ACK signal. The HeNB 111 then sends a COOKIE-ECHO signal to the eNB, which responds in turn with a COOKIE-ACK. Only then is an X2 Setup Request signal sent from the HeNB 111 to the eNB 112, and acknowledged. The procedure is similar to setup an S1 connection as shown in Figure 8, except that the MME 21 takes the pace of the eNB 112. Consequently. at least a 3-roundtrip delay is introduced into the handover preparation phase before the HeNB 111 can send out the Handover Request command (step 4 of Figures 5 and 6, "HO Request").

Embodiments of the present invention provide a mechanism to reduce the delay due to the dynamic S1/X2 interface re-establishment during the handover procedure from a HeNB to a macro (or another Home) eNB.

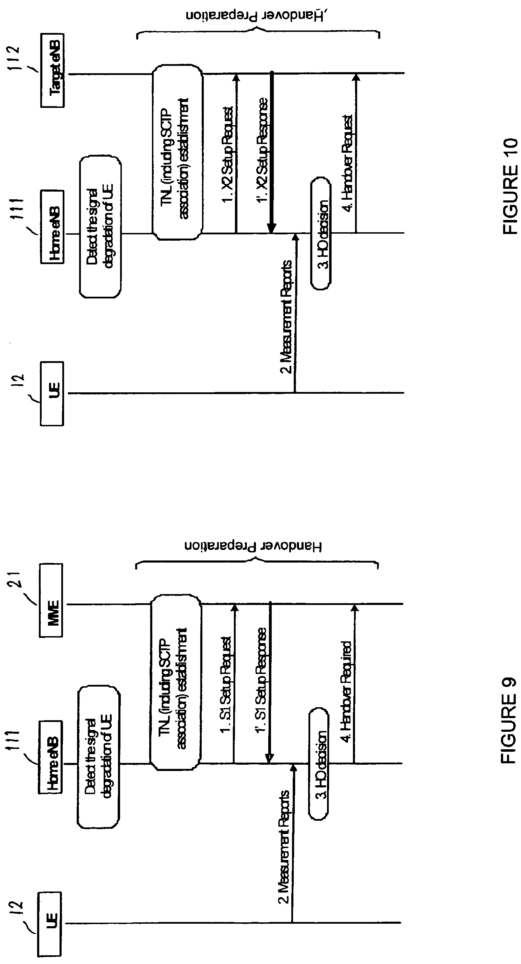

Figures 9 and 10 depict the Handover Preparation Phase in the basic handover scenarios, S1 Handover (with MME involvement) as a first embodiment of the present invention, and X2 Handover (without MME involvement) as the second embodiment. With this scheme, HeNB 111 detects the signal degradation of the associated UE 12 which may lead to the need for a handover from HeNB 111 to the overlapping eNB 112. In other words, the HeNB 111 watches for a potential handover situation even before the Measurement phase (step 2 in Figures 5 and 6) has taken place. Then the HeNB 111 initiates the SCTP association setup to establish the transport layer connection towards either the MME 21 in case of S1 handover (Fig. 9) or the eNB 112 (Fig. 10) in case of X2 handover, and initiates S1 or X2 setup procedure with the MME or the eNB as the case may be. At some later time point (perhaps some minutes afterwards), measurements conducted at the UE (or some other handover trigger) may result in a Handover Decision, in which case the subsequent procedure will follow Figure 5 or 6 as already mentioned. Alternatively, if the formal Handover Decision has not occurred after a predetermined time (30 minutes, for example) the transport layer connection could once again be released.

Thus, the S1 or X2 connection is made ready before the handover procedure takes place, and no extra delay is introduced into the handover.

The above process-relies on the HeNB being able to detect signal degradation between itself and the UE; however, it is expected that any HeNB will have the capacity to detect signal strength or some other related parameter on the uplink from the UE for other purposes, such as power control.

Alternatively, where an HeNB which has access to, or can detect, any other parameter (or set of parameters) relevant to communication with the UE, that parameter could be used in addition to, or instead of, signal degradation, to judge whether a handover might be required. For example, if the relative cost (calling rate) using the macro eNB changed at a certain time of day, this could be taken into account by the HeNB when determining whether a handover is likely to be required. Another example is to use moving speed of the UE. If for example a UE is moving quickly (above 30km/hr for example) then it would be more appropriate for the UE to be served by a macro eNB rather than by a HeNB, and this could be used as a parameter to assess the likelihood of a future handover.

Typically, each parameter will be measured (or calculated, or estimated) and compared with some form of threshold value to provide a judgement criterion, to judge whether or not a handover is likely to be needed. For example, signal deterioration may be judged to indicate a potential handover if the signal quality falls below a predetermined level. The parameters to be monitored may be used singly or in combination. That is, the monitoring means may judge that a handover situation exists when any one judgement criterion is fulfilled, or it may wait until two or more parameters indicate the possibility of a handover.

To evaluate the benefit of this proposal, an analytical model was developed to analyse the delay introduced into the handover procedures due to the interface re-establishment and the improvement achieved by the present invention. As mentioned before, it is expected that an existing broadband Internet connection will be used to connect the HeNB to the MME. Meanwhile, a macro eNB will normally have a dedicated, operator-owned backhaul connection to the core network. Thus, the "eNodeB Scenario" set out in the Table does not involve use of the Internet, but the "Home eNodeB Scenario" does.

Assuming that the average one way Internet delay is *Dinternet* (ms), the applied one-way transmission times and the associated processing times are summarized for the Control Plane in Table 1. Note that this model was to simulate the handover procedures on the control plane. The figures for user plane latency would usually be expected to be lower, but the conclusions drawn still apply.

**Table 1 Delay Budget**

| ***C-Plane Delay Budget in eNodeB Scenario:*** | | |
|---|---|---|
| Transmission from MME to eNodeB (7ms) and processing in eNodeB (2ms) | *MNc* | 9ms |
| One-way transmission from eNodeB to MME (7ms) and processing in MME (2ms) | *NMc* | 9 ms |
| One-way transmission between eNodeBs (12ms) and processing in eNodeB (2ms) | *NNc* | 14 ms |

| ***C-Plane Delay Budget in Home eNodeB Scenario:*** | | |
|---|---|---|
| Transmission from MME to HeNB (*Dinternet* ms) and processing in HeNB (2ms) | *MH* | (*Dinternet* + 2) ms |
| One-way transmission from HeNB to MME (*Dinternet* ms) and processing in MME (2ms) | *HM* | (*Dinternet* + 2) ms |
| One-way transmission between HeNB and eNodeB (*Dinternet* ms) and processing in HeNB/eNodeB (2ms) | *HN* | (*Dinternet* + 2) ms |

| ***Other:*** | | |
|---|---|---|
| One-way transmission from eNB/HeNB to UE (2ms) and processing in UE (2ms) | *NU* | 4ms |
| One-way transmission from UE to eNB/HeNB (2ms) and processing in eNB/HeNB (2ms) | *UN* | 4ms |
| Resource Reservation in eNB/HeNB | *RR* | 5ms |
| Synchronization time at UE | *Sync* | 20ms |

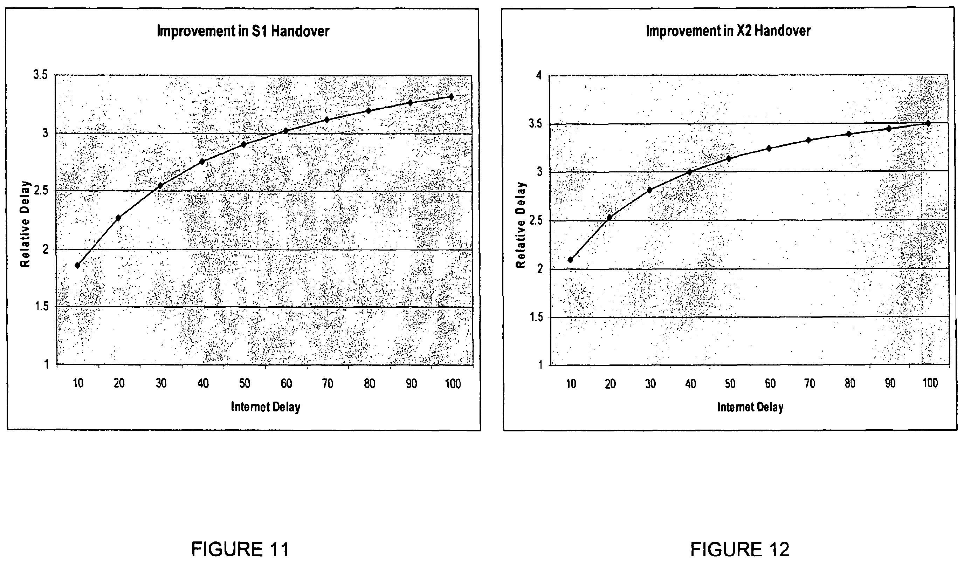

The simulation results are depicted in Figures 11 and Fig. 12, which show the improvement expected with use of the embodiments of the present invention in the S1 handover and X2 handover scenarios. In these Figures, "Relative Delay" is the ratio of the handover delay without use of the invention, to that with the invention. In both S1 and X2 handover cases, the relative delays are greater than 2, which indicates the significant improvement possible by applying the present invention. The greater the average and/or the more variable the amount of Internet delay, the greater the improvement achieved with the scheme because the Internet delay heavily affects the handover duration of both scenarios.

To summarise, embodiments of the present invention provide a scheme which detects the possible handover of an attached UE to or from a Home eNodeB, which enables the S1/X2 connection pre-establishment. This avoids the extra delay to re-establish the S1 or X2 connection, thus improving the handover performance.

Although described with reference to an LTE system having Home eNodeBs, the present invention is not limited to such use and can be applied to any wireless communication system whose access nodes have dynamic connections with each other and/or with a control entity of the system.

The invention also provides a computer program or a computer program product for carrying out the method described above, and a computer readable medium having stored thereon a program for carrying out the method. A computer program embodying the invention may be stored on a computer-readable medium, or it could, for example, be in the form of a signal such as a downloadable data signal provided from an Internet website, or it could be in any other form.

## Claims

1. A cellular wireless communication system in which a user equipment UE (12) is capable of wireless communication for exchanging data and/or signalling information with either of first and second nodes (111, 112) of a radio access network, the first and second nodes being connectable wirelessly or by wired means for exchanging signalling information with each other and with a control entity (21), and arranged to perform a handover of the UE from one of the nodes to the other, the first node (111)_having:
connection managing means arranged to manage a connection dynamically with the second node (112) and/or with the control entity (21) such that the connection is made or broken in accordance with the presence or absence of signalling information; and **characterised by**
monitoring means arranged to monitor one or more parameters relating to communication with the UE (12) when the first node is in wireless communication with the UE; and
handover preparation means arranged to pre-emptively re-establish said connection with the second node (112) and/or with the control entity (21) in the event that at least one parameter monitored by the monitoring means indicates the possibility of a handover of the UE from the first node to the second node.

2. The system according to claim 1 wherein the first node (111) has a range of wireless communication with the UE (12) which is less than, and located within, the range of the second node (112).

3. The system according to claim 1 or 2 wherein the handover preparation means establishes a transport layer of the connection with the second node (112) or with the control entity (21) as the case may be.

4. The system according to claim 3 wherein said connection with the second node (112) and/or with the control entity (21) employs Stream Control Transmission Protocol (SCTP) and wherein the handover preparation means initiates an SCTP association setup to establish the transport layer connection.

5. The system according to any preceding claim wherein the system is an LTE-based system in which at least one of the first and second nodes (111, 112) is a Home eNodeB, and the control entity (21) is an MME.

6. The system according to claim 5 wherein the connection of the first node (111)_with the second node (112) is an X2 connection and said handover is an X2 handover, and the handover preparation means is arranged to initiate an X2 setup procedure with the second node to re-establish said connection.

7. The system according to claim 5 wherein the connection of the first node (111) with the control entity (21) is an S1 connection and said handover is an S1 handover, and the handover preparation means is arranged to initiate an S1 setup procedure with the control entity to re-establish said connection.

8. The system according to any preceding claim wherein the one or more parameters relating to communication with the UE (12) include at least one parameter indicative of quality of communication between the UE and the first node (111).

9. The system according to claim 8 wherein the at least one parameter indicative of quality of communication with the UE (12) includes a signal strength of signals which the first node (111) receives from the UE.

10. The system according to any preceding claim wherein the connection managing means is arranged to release the connection re-established by the handover preparation means, in the event that no handover decision follows within a predetermined time after said re-establishment.

11. A cellular wireless communication method in which a user equipment UE (12) exchanges data and/or signalling information by wirelessly communicating with either of first and second nodes (111, 112) of a radio access network, the first and second nodes exchanging signalling information with each other and with a control entity (21), and arranged to perform a handover of the UE from one of the nodes to the other, the method comprising:
the first node (111) managing a connection dynamically with the second node (112) and/or with the control entity (21) such as to make or break said connection in accordance with the presence or absence of signalling information; **characterised by**
the first node (111) monitoring one or more parameters relating to communication with the UE (12) when the first node is in wireless communication with the UE; and
the first node (111) pre-emptively re-establishing said connection with the second node (112) and/or with the control entity (21) in the event that at least one parameter monitored by the monitoring means indicates the possibility of a handover of the UE from the first node to the second node.

12. A wireless communications device for use as an access node (111) of a wireless communication system and having:
connection managing means arranged to manage dynamically a connection with any other node (12, 112) of the system and/or with a control entity (21) thereof; **characterised by**
monitoring means arranged to monitor one or more parameters relating to communication with user equipment (12) when the device is in wireless communication with the user equipment; and
handover preparation means arranged, pre-emptively and prior to actual handover of the user equipment (12), to cause said connection managing means to re-establish said connection in the event that at least one parameter monitored by the monitoring means indicates the possibility of a handover of the user equipment.

13. The device according to claim 12 wherein the device (111) is used as a Home eNode B of an LTE-based wireless communication system.

14. Computer software which, when executed by a processor of an access node (111) in a wireless communication system, performs the method of claim 11.

## Patentansprüche

1. Funkzellen-Kommunikationssystem, in welchem eine Nutzerausrüstung UE (12) zur Funkkommunikation in der Lage ist, zum Austauschen von Daten und/oder Signalisierinformation mit irgendeinem von ersten und zweiten Knoten (111, 112) eines Funkzugriffnetzwerks, wobei die ersten und zweiten Knoten per Funk oder durch drahtgebundene Mittel zum Austauschen von Signalisierinformationen miteinander und mit einer Steuerentität (21) verbindbar sind, und ausgelegt sind, eine Übergabe des UE von dem einen der Knoten zum anderen durchzuführen, wobei der erste Knoten (111) aufweist:
ein Verbindungsverwaltungsmittel, das zum dynamischen Verwalten einer Verbindung mit dem zweiten Knoten (112) und/oder mit der Steueridentität (21) so angeordnet ist, dass die Verbindung gemäß der Anwesenheit oder Abwesenheit von Signalisierinformation gemacht oder unterbrochen wird; und **gekennzeichnet durch**
ein Überwachungsmittel, das ausgelegt ist, ein oder mehrere Parameter zu überwachen, welche sich auf die Kommunikation mit der UE (12) beziehen, wenn der erste Knoten in Funkkommunikation mit der UE steht; und
ein Übergabe-Vorbereitungsmittel, das ausgelegt ist, präemptiv die Verbindung mit dem zweiten Knoten (112) und/oder mit der Steueridentität (21) zu re-etablieren, im Ereignisfall, dass zumindest ein **durch** das Überwachungsmittel überwachter Parameter die Möglichkeit einer Übergabe aus der UE vom ersten Knoten zum zweiten Knoten anzeigt.

2. System gemäß Anspruch 1, wobei der erste Knoten (111) eine Reichweite von Funkkommunikation mit der UE (12) aufweist, welcher kleiner ist als und lokalisiert ist innerhalb der Reichweite des zweiten Knoten (112).

3. System gemäß Anspruch 1 oder 2, wobei das Übergabe-Vorbereitungsmittel eine Transportschicht der Verbindung zum zweiten Knoten (112) oder zur Steuer-Entität (21) etablieren kann, je nach Fall.

4. System gemäß Anspruch 3, wobei die Verbindung zum zweiten Knoten (112) und/oder zur Steuer-Entität (21) das Stromsteuer-Übertragungsprotokoll (SCTP) einsetzt, und wobei das Übergabe-Vorbereitungsmittel eine SCTP-Assoziierungseinrichtung initiiert, um die Transportschichtverbindung zu etablieren.

5. System gemäß einem vorstehenden Anspruch, wobei das System ein LTE-basiertes System ist, in welchem zumindest einer der ersten und zweiten Knoten (111, 112) ein Heim-eNodeB ist und die Steuer-Entität (21) ein MME ist.

6. System gemäß Anspruch 5, wobei die Verbindung des ersten Knoten (111) mit dem zweiten Knoten (112) eine X2-Verbindung ist und die Übergabe eine X2-Übergabe ist, und das Übergabe-Vorbereitungsmittel ausgelegt ist, eine X2-Einrichtungsprozedur mit dem zweiten Knoten zum Re-Etablieren der Verbindung zu initiieren.

7. System gemäß Anspruch 5, wobei die Verbindung des ersten Knoten (111) mit der Steueridentität (21) eine S1-Verbindung ist und die Übergabe eine S1-Übergabe ist und das Übergabe-Vorbereitungsmittel ausgelegt ist, eine S1-Einrichtungsprozedur mit der Steuer-Entität zum Re-Etablieren der Verbindung zu initiieren.

8. System gemäß einem vorstehenden Anspruch, wobei die sich auf Kommunikation mit der UE (12) beziehenden ein oder mehreren Parameter zumindest einen Parameter beinhalten, der für die Qualität der Kommunikation zwischen der UE und dem ersten Knoten (111) indikativ ist.

9. System gemäß Anspruch 9, wobei der zumindest eine Parameter, welcher für die Kommunikationsqualität mit der UE (12) indikativ ist, eine Signalstärke von Signalen enthält, die der ersten Knoten (111) aus der UE empfängt.

10. System gemäß einem vorstehenden Anspruch, wobei das Verbindungsverwaltungsmittel ausgelegt ist, die durch das Übergabe-Vorbereitungsmittel re-etablierte Verbindung freizugeben, falls keine Übergabeentscheidung innerhalb einer vorbestimmten Zeit nach der Re-Etablierung vorliegt.

11. Funkzell-Kommunikationsverfahren, in welchem eine Anwenderausrüstung UE (12) Daten und/oder Signalisierinformation durch Funkkommunikation mit irgendeinem von ersten und zweiten Knoten (111, 112) eines Funkzugriffnetzwerks austauscht, wobei die ersten und zweiten Knoten Signalisierinformation miteinander und mit einer Steuerentität (21) austauschen, und ausgelegt sind, um eine Übergabe der UE aus dem einen der Knoten zum anderen durchzuführen, wobei das Verfahren umfasst:
dass der erste Knoten (111) eine Verbindung dynamisch mit dem zweiten Knoten (112) und/oder mit der Steueridentität (21) so verwaltet, dass ein Bruch der Verbindung gemäß Anwesenheit oder Abwesenheit von Signalisierinformation durchgeführt wird; **gekennzeichnet dadurch, dass**
der erste Knoten (111) ein oder mehrere Parameter überwacht, welche sich auf die Kommunikation mit der UE (12) beziehen, wenn der erste Knoten in Funkkommunikation mit der UE steht; und
der erste Knoten (111) die Verbindung mit dem zweiten Knoten (112) und/oder mit der Steueridentität (21) präemptiv wieder etabliert, falls zumindest ein durch das Überwachungsmittel überwachter Parameter die Möglichkeit einer Übergabe der UE aus dem ersten Knoten an den zweiten Knoten angibt.

12. Funk-Kommunikationsvorrichtung zur Verwendung als ein Zugriffsknoten (111) eines Funk-Kommunikationssystems, aufweisend:
ein Verbindungsverwaltungsmittel, das zum dynamischen Verwalten einer Verbindung mit einem anderen Knoten (12, 112) des Systems und/oder mit einer Steueridentität (21) desselben ausgelegt ist; **gekennzeichnet durch**
ein Überwachungsmittel, das ausgelegt ist, ein oder mehrere Parameter zu überwachen, welche sich auf die Kommunikation mit Nutzerausrüstung (12) beziehen, wenn die Vorrichtung mit der Nutzerausrüstung in Funkkommunikation steht; und
ein Übergabe-Vorbereitungsmittel, welches ausgelegt ist, präemptiv und vor tatsächlicher Übergabe der Nutzerausrüstung (12) das Verbindungsverwaltungsmittel zu veranlassen, die Verbindung in dem Ereignisfall wieder zu etablieren, bei dem zumindest ein **durch** das Überwachungsmittel überwachter Parameter die Möglichkeit einer Übergabe der Nutzerausrüstung angibt.

13. Vorrichtung gemäß Anspruch 12, wobei die Vorrichtung (111) als ein Heim-eNodeB eines LTE-basierten Funkkommunikationssystem verwendet wird.

14. Computersoftware, die bei Ausführung durch einen Prozessor eines Zugriffsknotens (111) in einem Funkkommunikationssystem das Verfahren nach Anspruch 11 durchführt.

## Revendications

1. Système de communication sans fil cellulaire dans lequel un équipement d'utilisateur, UE, (12) est apte à une communication sans fil en vue d'échanger des données et/ou des informations de signalisation avec des premier et second noeuds (111, 112) d'un réseau d'accès radio, les premier et second noeuds pouvant être connectés par voie hertzienne ou par un moyen filaire en vue d'échanger des informations de signalisation, mutuellement, et avec une entité de commande (21), et agencé de manière à mettre en oeuvre un transfert intercellulaire de l'équipement UE de l'un des noeuds à l'autre, le premier noeud (111) présentant :
un moyen de gestion de connexion agencé de manière à gérer une connexion, dynamiquement, avec le second noeud (112) et/ou avec l'entité de commande (21), de sorte que la connexion est établie ou rompue en fonction de la présence ou de l'absence d'informations de signalisation ; et **caractérisé par**
un moyen de surveillance agencé de manière à surveiller un ou plusieurs paramètres connexes à la communication avec l'équipement UE (12) lorsque le premier noeud est en communication sans fil avec l'équipement UE ; et
un moyen de préparation de transfert intercellulaire agencé de manière à rétablir de façon préventive ladite connexion avec le second noeud (112) et/ou avec l'entité de commande (21) dans le cas où au moins un paramètre surveillé par le moyen de surveillance indique la possibilité d'un transfert intercellulaire de l'équipement UE, du premier noeud au second noeud.

2. Système selon la revendication 1, dans lequel le premier noeud (111) présente une plage de communication sans fil avec l'équipement UE (12) qui est inférieure à et est située dans la plage du second noeud (112).

3. Système selon la revendication 1 ou 2, dans lequel le moyen de préparation de transfert intercellulaire établit une couche de transport de la connexion avec le second noeud (112) ou avec l'entité de commande (21), le cas échéant.

4. Système selon la revendication 3, dans lequel ladite connexion avec le second noeud (112) et/ou avec l'entité de commande (21) emploie un protocole de transmission de commande de flux (SCTP) et dans lequel le moyen de préparation de transfert intercellulaire initie un établissement d'association de protocole SCTP en vue d'établir la connexion de couche de transport.

5. Système selon l'une quelconque des revendications précédentes, dans lequel le système est un système basé sur la technologie LTE dans lequel au moins l'un des premier et second noeuds (111, 112) est une station « eNodeB » domestique, et l'entité de commande (21) est une entité de gestion de la mobilité, MME.

6. Système selon la revendication 5, dans lequel la connexion entre le premier noeud (111) et le second noeud (112) est une connexion X2, ledit transfert intercellulaire est un transfert intercellulaire X2, et le moyen de préparation de transfert intercellulaire est agencé de manière à initier une procédure d'établissement X2 avec le second noeud en vue de rétablir ladite connexion.

7. Système selon la revendication 5, dans lequel la connexion entre le premier noeud (111) et l'entité de commande (21) est une connexion S1, ledit transfert intercellulaire est un transfert intercellulaire S1, et le moyen de préparation de transfert intercellulaire est agencé de manière à initier une procédure d'établissement S1 avec l'entité de commande en vue de rétablir ladite connexion.

8. Système selon l'une quelconque des revendications précédentes, dans lequel ledit un ou lesdits plusieurs paramètres connexes à la communication avec l'équipement UE (12) incluent au moins un paramètre indicatif de la qualité de communication entre l'équipement UE et le premier noeud (111).

9. Système selon la revendication 8, dans lequel ledit au moins un paramètre indicatif de la qualité de communication avec l'équipement UE (12) inclut une intensité de signal des signaux que le premier noeud (111) reçoit en provenance de l'équipement UE.

10. Système selon l'une quelconque des revendications précédentes, dans lequel le moyen de gestion de connexion est agencé de manière à libérer la connexion rétablie par le moyen de préparation de transfert intercellulaire, dans le cas où aucune décision de transfert intercellulaire n'est mise en oeuvre dans un temps prédéterminé après ledit rétablissement.

11. Procédé de communication sans fil cellulaire dans lequel un équipement d'utilisateur, UE, (12) échange des données et/ou des informations de signalisation en communiquant par voie hertzienne avec des premier et second noeuds (111, 112) d'un réseau d'accès radio, les premier et second noeuds échangeant des informations de signalisation, mutuellement, et avec une entité de commande (21), et agencé de manière à mettre en oeuvre un transfert intercellulaire de l'équipement UE de l'un des noeuds à l'autre, le procédé comprenant l'étape ci-dessous dans laquelle :
le premier noeud (111) gère une connexion dynamiquement avec le second noeud (112) et/ou avec l'entité de commande (21), de manière à établir ou à rompre ladite connexion en fonction de la présence ou de l'absence d'informations de signalisation ; **caractérisé par** les étapes ci-dessous dans lesquelles
le premier noeud (111) surveille un ou plusieurs paramètres connexes à la communication avec l'équipement UE (12) lorsque le premier noeud est en communication sans fil avec l'équipement UE ; et
le premier noeud (111) rétablit de manière préventive ladite connexion avec le second noeud (112) et/ou avec l'entité de commande (21) dans le cas où au moins un paramètre surveillé par le moyen de surveillance indique la possibilité d'un transfert intercellulaire de l'équipement UE, du premier noeud au second noeud.

12. Dispositif de communication sans fil destiné à être utilisé en qualité de noeud d'accès (111) d'un système de communication sans fil et présentant :
un moyen de gestion de connexion agencé de manière à gérer dynamiquement une connexion avec un quelconque autre noeud (12, 112) du système et/ou avec une entité de commande (21) de celui-ci ; **caractérisé par**
un moyen de surveillance agencé de manière à surveiller un ou plusieurs paramètres connexes à la communication avec l'équipement d'utilisateur (12) lorsque le dispositif est en communication sans fil avec l'équipement d'utilisateur ; et
un moyen de préparation de transfert intercellulaire agencé, de manière préventive et préalablement au transfert intercellulaire en cours de l'équipement d'utilisateur (12), de manière à amener ledit moyen de gestion de connexion à rétablir ladite connexion dans le cas où au moins un paramètre surveillé par le moyen de surveillance indique la possibilité d'un transfert intercellulaire de l'équipement d'utilisateur.

13. Dispositif selon la revendication 12, dans lequel le dispositif (111) est utilisé en qualité de station « eNodeB » domestique d'un système de communication sans fil basé sur la technologie LTE.

14. Logiciel qui, lorsqu'il est exécuté par un processeur d'un noeud d'accès (111) dans un système de communication sans fil, met en oeuvre le procédé selon la revendication 11.
